Europäisches Patentamt

European Patent Office

Office européen des brevets

(11) Veröffentlichungsnummer: **0 290 016**
**A2**

## EUROPÄISCHE PATENTANMELDUNG

(21) Anmeldenummer: 88107220.1

(22) Anmeldetag: 05.05.88

(51) Int. Cl.⁴ **B29C 65/34**

(30) Priorität: 08.05.87 DE 3715377

(43) Veröffentlichungstag der Anmeldung:
09.11.88 Patentblatt 88/45

(84) Benannte Vertragsstaaten:
**AT BE CH DE ES FR GB GR IT LI LU NL SE**

(71) Anmelder: **HOECHST AKTIENGESELLSCHAFT**
**Postfach 80 03 20**
**D-6230 Frankfurt am Main 80(DE)**

(72) Erfinder: **Ott, Willy**
**Breslauer Strasse 27**
**D-6233 Kelkheim (Taunus)(DE)**
Erfinder: **John, Peter**
**Sindlinger Strasse 52**
**D-6234 Hattersheim am Main(DE)**

(54) Verfahren zum thermischen Verbinden von Formteilen und Halbzeugen.

(57) Die Erfindung bezieht sich auf ein Verfahren zum thermischen Verbinden von Formteilen und Halbzeugen aus elektrisch nicht leitenden Werkstoffen durch Schweißen oder mittels Schmelzkleber. Bei diesem Verfahren wird ein flächenförmiges Heizelement zwischen die zu verbindenden Formteile und Halbzeuge gebracht und dort nach dem Schweißen belassen. Man erhält auch unter schwierigen Bedingungen einwandfreie Verbindungen.

EP 0 290 016 A2

## Verfahren zum thermischen Verbinden von Formteilen und Halbzeugen

Die Erfindung bezieht sich auf ein Verfahren zum thermischen Verbinden von Formteilen und Halbzeugen aus elektrisch nicht leitenden Werkstoffen durch Schweißen oder mittels Schmelzkleber.

Für das Schweißen von Formteilen und Halbzeugen aus thermoplastischen Kunststoffen ist eine große Zahl von Verfahren bekannt. Beispiele sind die Anwendung von Warmgas, Heizelementen, Extrudern, Hochfrequenz, Ultraschall und Reibungswärme durch Rotation oder Vibration, um die wichtigsten Verfahren zu nennen.

Jedes der genannten Verfahren hat spezielle Einsatzgebiete. So finden die ersten drei Verfahren meist nur Anwendung bei größerer Materialdicke, wie bei Rohren, Platten und Bahnen. Andere Verfahren, wie das Hochfrequenzverfahren, können nur bei Kunststoffen mit hohem dielektrischen Verlustfaktor eingesetzt werden. Beim Rotationsreibschweißen muß mindestens ein Körper rotationssymmetrisch sein. Das Impulsverfahren kann nur bei dünnen Folien und auch nicht bei allen Thermoplasten eingesetzt werden.

Weiterhin ist ein Heizwendelschweißverfahren bekannt, welches zum Verbinden von Kunststoffrohren mit entsprechenden Fittings angewendet wird. Bei diesen Fittings ist ein electrischer Leiter aus einem einzigen Draht wendelartig in die Muffe eingebettet. Dies geschieht bereits beim Spritzgießen des Fittings. Nach dem Zusammenstecken von Rohr und Fitting wird eine electrische Spannung an die Drahtenden gelegt. Der dabei fließende Strom erwärmt den Draht, der wiederum den ihn umgebenden Kunststoff aufschmilzt und so Muffe und Rohr miteinander verschweißt. Ein solches Verfahren ist jedoch in seinen Anwendungsmöglichkeiten sehr begrenzt.

Für dicke Teile, die flächig auf eine Platte geschweißt werden sollen, gibt es manchmal keine befriedigende Lösung. Auch das Verschweißen dicker, möglicherweise flexibler Folien (ca. 1 mm dick) ist schwierig, besonders dann, wenn solche Folien, wie zum Beispiel bei Dehnfugenüberbrückungen an Gebäuden, unter Baustellenbedingungen zusammengeschweißt werden sollen. In diesem Anwendungsfall wird wegen der auftretenden Spannungen eine mechanisch feste und wegen des einwirkenden Mediums dichte Verschweißung gefordert, die wegen der Gütesicherung zudem reproduzierbar hergestellt werden muß. Das große Problem bei den üblichen Schweißverfahren ist, daß bei den Folien durch unkontrollierte Wärmezufuhr je nach Plastifizierungsgrad ein zu hoher Anpreßdruck entsteht und die Schweißstelle (partiell) abgequetscht werden kann.

Es wurde nun gefunden, daß auch unter  -schwierigen Bedingungen einwandfreie Verbindungen erzielt werden, wenn man ein flächenförmiges Heizelement zwischen die zu verbindenden Formteile und Halbzeuge bringt und dort nach dem Schweißen beläßt.

Die Erfindung betrifft somit ein Verfahren zum thermischen Verbinden von Formteilen und Halbzeugen aus elektrisch nicht leitenden Werkstoffen durch Erzeugen einer Verbindungsschicht zwischen den zu verbindenden Formteilen und Halbzeugen, dadurch gekennzeichnet, daß die Verbindungsschicht mittels eines in der Schicht verbleibenden flächigen Heizelementes aus einem elektrisch leitenden Material erzeugt wird.

Bei dem erfindungsgemäßen Verfahren wird zwischen die zu verbindenden Formkörper im Bereich der Verbindungsstelle ein flächiges Heizelement aus einem elektrisch leitenden Material eingebracht. Dieses elektrisch leitende Material kann aus Metall sein, beispielsweise Drahtfäden, glattem oder aufgerauhtem Drahtgewebe, Drahtgeflecht mit feinen herausragenden Metallspitzen oder Metallschlingen. Als Metalle eignen sich alle guten elektrischen Leiter, wobei im Einzelfall solche Metalle auszuschließen sind, die den Kunststoff -schädigen können (z.B. Kupfer bei Polypropylen).

Das elektrisch leitende Material kann auch aus einem Nichtleiter (beispielsweise Kunststoff-oder Keramikfasern) bestehen, welcher eine dünne Metallschicht trägt, die nach bekannten Verfahren aufgebracht wurde.

Das elektrisch leitende Material kann jedoch auch organischer Art sein, beispielsweise aus Kohlenstoff in Form von Fasern, Geweben, Netzen oder Geflechten oder eingelagert in einer Kunststoffmatrix, gegebenenfalls noch metallbeschichtet.

Bevorzugt verwendet werden Drahtgewebe oder Drahtbahnen mit einer Drahtstärke von 0,05 bis 0,5, vorzugsweise 0,1 bis 0,3 mm und einer Maschenweite oder einem Drahtabstand von 0,25 bis 2,5, vorzugsweise 0,4 bis 0,7 mm. Für das Verschweißen von Folien sollte die Dicke des Drahtgewebes kleiner oder gleich der halben Dicke der Folie sein.

Das elektrisch leitende Material ist zweckmäßigerweise etwas größer als die Verbindungsfläche, so daß die überstehenden Enden für die Stromzuführung dienen können.

Während der thermischen Verbindung werden die zu verbindenden Formteile und Halbzeuge in bekannter Weise gegeneinander gedrückt.

Mit Hilfe des erfindungsgemäßen Verfahrens lassen sich Formteile und Halbzeuge verbinden, welche aus einem elektrisch nicht leitenden Material bestehen. Hierzu gehören thermoplastische Kunststoffe, wie beispielsweise Polyethylen, Polypropylen, Polystyrol, Polyester, Polyamide, Poly-(meth)acrylate, Polyvinylidenfluorid, Polytetrafluorethylen, Fluorcopolymerisate, duroplastische Kunststoffe, wie beispielsweise Phenol-Formaldehyd-Harze, Melaminharze, Harnstoffharze, Elastomere wie beispielsweise natürliche oder synthetische Kautschuktypen oder Fluorelastomere, keramische Werkstoffe, wie beispielsweise Porzellan, Steinzeug, Steingut, Glaskeramik, Glas.

Verbunden werden können Formkörper, welche an den zu verbindenden Stellen eine ebene Oberfläche besitzen, vorzugsweise Folien und Platten, insbesondere Folien. Diese Oberfläche wird in der üblichen Weise für das Verbinden vorbereitet, dabei sollte die Verbindungsoberfläche der Formteile und Halbzeuge aus einem nichtthermoplastischen Werkstoff zweckmäßigerweise rauh sein.

Die Verbindungsschicht zwischen den zu verbindenden Formteilen und Halbzeugen entsteht entweder aus dem Werkstoff der Formteile und Halbzeuge oder aus einem Werkstoff, der zusammen mit dem Heizelement eingebracht wird, indem das Heizelement zuvor mit einem geeigneten Material, welches die zusammenzufügenden Teile zu verbinden vermag, beschichtet wurde. Dieser Werkstoff kann der gleiche sein, aus welchem die zu verbindenden Formteile und Halbzeuge bestehen, beispielsweise aus einem thermoplastischen Kunststoff, oder verschieden von dem Werkstoff der Formteile und Halbzeuge, beispielsweise ein Schmelzkleber oder eine vulkanisierbare Masse, wenn Formteile und Halbzeuge aus nicht thermoplastischen Werkstoffen verbunden werden sollen oder wenn die Schmelz-oder Sintertemperatur zu hoch ist (beispielsweise bei PTFE).

Die für das Verbinden der Formteile und Halbzeuge erforderliche Temperatur ergibt sich aus der Art des Werkstoffes der Formteile und Halbzeuge und der Verbindungsschicht und liegt oberhalb des Kristallitschmelzpunktes oder des Erweichungspunktes. Dabei wird die niedrigste, gerade noch eine ausreichende Festigkeit der Verbindung ergebende Temperatur gewählt, indem die Spannung, die Stromstärke und die Einschaltdauer der an dem Heizelement angeschlossenen Stromquelle variiert wird.

Mittels des erfindungsgemäßen Verfahrens lassen sich sehr feste Verbindungen herstellen. Das gelingt oft sogar bei normalerweise nicht verschweißbaren Kunststoffen, wenn ein spezielles Drahtgeflecht mit optimaler Maschenweite verwendet wird. Bei Verwendung eines mit einem Schmelzkleber beschichteten Heizelementes erhält man durch erneutes Anlegen von Spannung lösbare Verbindungen.

Weiterhin kann das in der Zwischenschicht verbleibende Heizelement als stromführendes Element dienen, wenn es beispielsweise aus parallelen Drahtfäden besteht.

Eingesetzt wird das erfindungsgemäße Verfahren somit in der Bautechnik zum Verbinden von Dichtungsbahnen für Dächer, Gruben, Tanktassen, Deponien oder zum Überbrücken von Dehnfugen und Kreuzungspunkten bei Bauwerksabdichtungen, in der Elektronik beim Einbau von Bauteilen, wobei die Drahtbahnen als stromführende Elemente benutzbar sind, bei der Verwendung von Drahtgeweben ergibt sich eine Abschirmung,
in der allgemeinen Fertigungstechnik bei der Herstellung von Gebrauchsartikeln, die nach der Fertigstellung nicht mehr geöffnet werden dürfen.

Beispiel 1

Zwei Bänder aus LDPE (1 mm dick) wurden auf einer Länge von 100 mm so übereinandergelegt, daß die zu verbindenden Flächen 30 mm breit waren. Zwischen diese Flächen wurde ein - schmaler Streifen Drahtgewebe (Zinn-Bronze, Drahtstärke 0,14 mm, Maschenweite 0,53 mm) von 140 mm Länge gelegt und die Probe zwischen zwei Klemmbacken eingespannt. Die überstehenden Enden des Drahtgewebebandes wurden durch Umklappen verdickt und für 45 sec an eine Gleichstromquelle (10 V, 4 A) angeschlossen. Nach dem Abkühlen auf Raumtemperatur wurde des Festigkeit der Schweißung im Zugversuch geprüft. Die Verbindung riß im Grundmaterial.

Beispiel 2

Zwei Bänder aus einem modifizierten Ethylen-Tetrafluorethylen-Copolymerisat mit den Abmessungen wie in Beispiel 1 wurden analog diesem Beispiel geschweißt, jedoch war das Drahtgewebe zuvor mit dem gleichen Fluorcopolymerisat beschichtet worden. Bei der Prüfung der Festigkeit der Schweißung riß die Verbindung im Grundmaterial.

Beispiel 3

Zwei kleine gesinterte Keramikkörper wurden mit je einer ebenen Fläche zusammengeklebt, indem ein mit einem Fluorcopolymerisat-Schmelzkleber beschichtetes Drahtgewebe (Zinn-Bronze, Drahtstärke 0,14 mm, Maschenweite 0,53 mm) zwischen die beiden Keramikkörper gebracht und durch Anlegen eines Gleichstromes (10 V, 4 A, 45 sec) erwärmt wurde. Bei der Prüfung der Festigkeit der Verklebung trat teilweise Bruch im keramischen Grundmaterial ein.

## Ansprüche

1. Verfahren zum thermischen Verbinden von Formteilen und Halbzeugen aus elektrisch nicht leitenden Werkstoffen durch Erzeugen einer Verbindungsschicht zwischen den zu verbindenden Formteilen und Halbzeugen, dadurch gekennzeichnet, daß die Verbindungsschicht mittels eines in der Schicht verbleibenden flächigen Heizelementes aus einem elektrisch leitenden Material erzeugt wird.

2. Verfahren nach Anspruch 1, dadurch gekennzeichnet, daß das elektrisch leitende Material ein Drahtgewebe mit einer Drahtstärke von 0,05 bis 0,5 mm und einer Maschenweite von 0,25 bis 2,5 mm ist.

3. Verfahren nach Anspruch 1, dadurch gekennzeichnet, daß die zu verbindenden Formteile und Halbzeuge Folien aus einem thermoplastischen Werkstoff sind.

4. Verfahren nach Anspruch 1, dadurch gekennzeichnet, daß das Heizelement mit einem Material beschichtet ist, welches die zusammenzufügenden Teile zu verbinden vermag.